# EUROPEAN PATENT APPLICATION

(11) **EP 4 796 917 A1**
(43) Date of publication of application: **26.08.2026**
(21) Application number: 25159668.0
(22) Date of filing: 24.02.2025
(51) Int. Cl.: G01N 21/64, G01N 21/84

(54) **MODULATED PHOTOLUMINESCENCE SPECTROSCOPY**

(71) Applicant: Nederlandse Organisatie voor toegepast- natuurwetenschappelijk onderzoek TNO, 2595 DA 's-Gravenhage (NL); Stichting Nederlandse Wetenschappelijk Onderzoek Instituten, institute AMOLF, 1098 XG Amsterdam (NL)
(72) Inventor: Gillespie, Sarah, 1098 XG Amsterdam (NL); Garnett, Erik Christian, 1098 XG Amsterdam (NL); Ehrler, Bruno, 1098 XG Amsterdam (NL); Alvarez, Agustin, 1098 XG Amsterdam (NL)
(74) Representative: V.O.

(57) **Abstract**

A method and system for analyzing a sample (S). Input light (Li) is directed onto the sample (S). The input light (Li) includes at least one modulated input component (Ci). Output light (Lo) resulting from interaction (X) of the input light (Li) with the sample (S) is measured. The measured output light (Lo) includes at least one modulated output component (Co) that varies as a function of time (t) depending on the interaction (X). Based on the measured output light (Lo) an output modulation phase (Φ₀) and/or amplitude (Ao) of the at least one modulated output component (Co) is determined. Based at least in part on at least one of the output modulation phase (Φ₀) and the output modulation amplitude (Ao), at least one property (Sp) of the sample (S) associated with the interaction (X) is determined.

## Description

### TECHNICAL FIELD AND BACKGROUND

The present disclosure relates to the analysis and characterization of samples using light. In particular, the present disclosure is directed towards the analysis of photoluminescence spectra from materials, layers, and/or (partial) devices using modulated light.

As background, Impedance Spectroscopy (IS) is an electrochemical analysis technique for characterizing the electrical properties of materials and interfaces over a range of frequencies. By applying an alternating voltage (AC) signal and measuring the resulting current response, IS enables the determination of complex impedance components, including resistance, capacitance, and inductance. As further background, Intensity-Modulated Photocurrent Spectroscopy (IMPS) is an optoelectronic characterization method used to investigate the charge carrier dynamics of photoactive materials. In IMPS, a small sinusoidal modulation of light intensity is applied to a sample, and the corresponding photocurrent response is measured as a function of frequency. As further background, Intensity-Modulated Photovoltage Spectroscopy (IMVS) may be considered as a complementary technique to IMPS that focuses on charge carrier recombination processes in photoactive systems. Under open-circuit conditions, IMVS measures the photovoltage response to a modulated light source, allowing for the determination of electron lifetimes and recombination kinetics.

While the known techniques may provide various insights, they may be limited in their applicability. One limitation of IS, IMPS, and IMVS is their requirement for electrical contacts and complete, functioning devices. For example, this constraint may prevent characterization of partially fabricated devices, intermediate layers, or materials intended for electrical or non-electrical applications. Additionally, the necessity of electrical contacts means these techniques may be limited in spatially resolving where specific issues occur within a device, making it difficult to isolate and identify limiting components or regions. Further limitations may arise from the application of electrical fields during the measurement. The presence of these fields may complicate analysis, particularly in materials that are highly sensitive to their environment, such as metal halide perovskites. The electrical measurement requirement may also pose challenges for quality control in manufacturing processes, as these techniques cannot be readily implemented as in-line characterization tools during production. Furthermore, in multilayer devices, the measured response may often become dominated by layers adjacent to the active material, obscuring the properties of interest. The challenge of separating processes occurring within the semiconductor from those at the contacts remains a persistent issue in these electrical characterization methods. Further limitations may occur when studying materials exhibiting slow dynamic processes, such as ionic motion or chemical reactions, which can occur over extended timescales. Traditional electrical characterization methods may not adequately capture these phenomena, leaving important material properties and degradation mechanisms poorly understood.

Accordingly, there remains a need for further improved analysis and characterization of samples, such as (semiconductor) materials, layers, and/or (partial) devices, alleviating at least some of the disadvantages of the known methods and system while maintaining at least some of their advantages.

### SUMMARY

Aspects of the present disclosure may be embodied as methods, systems, and computer program products for analyzing a sample. One or more light sources may generate input light. The input light is directed onto the sample and includes at least one modulated input component. One or more detectors may measure output light. The output light results from interaction of the input light with the sample and includes at least one modulated output component that varies as a function of time depending on the interaction. At least one controller may be operatively coupled to the at least one light source and the least one light detector. The at least one controller may comprise one or more processors. Based on the measured output light an output modulation phase and/or amplitude of the at least one modulated output component is determined. An analysis of the sample may be based at least in part on at least one of the output modulation phase and/or the output modulation amplitude. In particular, at least one property of the sample associated with the interaction may be determined.

By providing an entirely optical characterization method that does not require electrical contacts, the present teachings may enable the analysis of samples at any stage of fabrication, including partial devices, intermediate layers, or even materials intended for electrical or non-electrical applications. The present teachings may advantageously enable spatially-resolved characterization of different sample locations, providing detailed mapping of material properties across surfaces and/or through depths of samples. By analyzing modulated characteristics of the output light, including intensity and/or spectral modulation characteristics, the present teachings may enable investigation of different types of processes which may occur at different timescales within the sample. Without being bound by theory, the time-dependent optical response may be particularly sensitive to ionic motion, interfacial processes, and chemical reactions due to the non-invasive nature of the measurement, allowing these phenomena to be studied without the complicating effects of applied electrical fields.

The present teachings may be particularly advantageous for analyzing luminescent materials, and especially semiconductor materials exhibiting a photoluminescent response. The inventors surprisingly find that measuring the phase and amplitude of spectral characteristics, such as emission wavelength and spectral width, may provide unique insights into compositional changes, phase segregation, and structural modifications that cannot be probed using conventional electrical characterization methods. According to some embodiments, samples comprising stacks of two or more semiconductor layers forming junctions between different materials may be characterized, enabling analysis of interface-specific phenomena and inter-layer interactions such as charge transfer across interfaces, band alignment effects, interface state formation, and charge redistribution between layers. Without being bound by theory, these interface phenomena may be particularly accessible because carriers generated in one layer may interact with states or carriers in adjacent layers before recombination occurs.

The present teachings may be especially advantageous for characterizing photovoltaic devices and materials used in their construction, particularly perovskite-based solar cells where phenomena such as ion migration, interfacial recombination, and chemical stability critically affect device performance. For example, the method may be implemented during various stages of device fabrication, enabling characterization of individual semiconductor layers, interfacial transport layers, and complete device stacks. The teachings may also be applied to other optoelectronic devices including light-emitting diodes, photodetectors, and related semiconductor technologies where understanding material properties and interface characteristics may be used to optimize performance and/or detect suboptimal manufacturing conditions.

The present teachings may also be particularly advantageous for analyzing memristive materials and devices that exhibit memory effects in their optoelectronic properties. According to some embodiments, samples comprising materials whose optical response depends on prior conditions may be characterized, enabling analysis of memory effects and history-dependent phenomena that cannot be probed using conventional steady-state characterization methods. For example, these memory effects may be particularly accessible through phase delay measurements, as the timing relationship between input modulation and output response can reveal how the material retains information about previous states. For example, measuring the phase and amplitude of the photoluminescent response may provide unique insights into how memristive materials and devices store and process information through persistent changes in their optoelectronic properties.

By modulating the intensity of the input light, corresponding time-varying intensity characteristics may be measured in the output light. Through spectral resolution of the measured output light, additional information about material properties and dynamics may be obtained beyond what is available from intensity measurements alone. By measuring an output spectrum of the output light as a function of time, time-varying spectral characteristics that reveal underlying physical processes within the sample may be tracked. For example, these spectral characteristics may include variations in spectral position associated with compositional or bandgap changes, as well as variations in spectral width indicative of energy disorder and heterogeneity of emissive states.

By detecting the output light as a function of time in synchronization with the modulated input component, temporal relationships between input and output modulation may be analyzed. Through determination of the output modulation phase based on a shift in time of the modulated output component relative to the modulated input component, information about characteristic timescales of various processes within the sample may be obtained. For example, phase shifts between input intensity modulation and output spectral characteristics may reveal sequences of physical processes such as carrier generation, energy relaxation, and recombination. By analyzing different spectral characteristics that exhibit distinct phase relationships, insights into coupling between electronic, ionic, and structural dynamics may be gained that may not be accessible through conventional steady-state measurements.

By modulating the input light according to a periodic function, systematic analysis of sample responses may be performed. Through modulation of the input component at frequencies less than 100 kHz, processes occurring on microsecond to second timescales may be probed. For example, processes occurring on millisecond timescales, such as trapping and detrapping phenomena, may be investigated using intermediate-frequency modulation below 10 kHz. By employing low-frequency modulation below 1 Hz, relatively slow processes occurring on timescales of seconds to hours, such as compositional changes or structural reorganization, may be studied. Without being bound by theory, this frequency-dependent response may enable detailed investigation of various physical and chemical processes that may affect the sample's optical properties across different temporal domains. For example, in perovskite materials, processes ranging from rapid carrier recombination to slow ionic motion may be distinguished and analyzed by appropriate choice of the modulation frequency.

By performing a series of measurements wherein input parameters are systematically varied between iterations, comprehensive characterization of sample properties may be achieved. Through variation of the input modulation frequency, different physical processes may be isolated based on their characteristic timescales. By changing the input modulation amplitude, the sample response under different excitation strengths may be investigated. Through adjustment of the input offset added to the modulated component, the influence of background carrier density on dynamic processes may be studied. Variation of the input spectrum may be used to target materials or regions with different absorption wavelength and/or enable depth-dependent characterization of buried interfaces based on wavelength-dependent penetration. By analyzing the measured modulation amplitude and phase shift as functions of these varied input parameters, detailed information about material properties may be obtained. For example, frequency-dependent measurements may reveal multiple processes with distinct characteristic times, while amplitude-dependent measurements may indicate the onset of nonlinear effects or saturation phenomena. Through systematic variation of the input offset, transitions between different operating regimes may be identified. For example, the combined analysis of amplitude and phase responses across different measurement conditions may enable separation of overlapping processes and determination of their relative contributions to the overall sample response.

By determining the output modulation amplitude relative to the input modulation amplitude, and the output modulation phase relative to the input modulation phase, quantitative analysis of the sample response may be performed. Through normalization to the input parameters, changes in the sample's response may be characterized independent of variations in measurement conditions. For example, these relative measurements may provide direct information about the efficiency and timing of various processes occurring within the sample. By analyzing relative amplitudes and phases between different modulated characteristics, multiple aspects of the sample response may be characterized simultaneously. Through measurement of the relationship between output intensity modulation and input light characteristics, processes affecting photoluminescence efficiency may be studied. By determining relative amplitudes and phases between spectral characteristics and input light modulation, compositional and structural dynamics may be investigated. Through analysis of relationships between intensity and spectral characteristics of the output light, coupling between different physical processes may be revealed. For example, phase differences between intensity and spectral position modulation may indicate whether compositional changes precede or follow changes in emission efficiency. For example, these multi-parameter analyses may provide unique insights into cause-and-effect relationships between different processes occurring within the sample.

By fitting the output modulation phase and amplitude to physical models of the sample response, quantitative information about material properties may be extracted. Through parameterization of the interaction between input light and the sample, measured data may be interpreted in terms of physical processes and material characteristics. For example, the frequency-dependent response may be analyzed using transfer functions that describe relationships between input and output modulation. By modeling the optical response using equivalent electronic circuit elements, complex dynamic processes may be represented in terms of familiar components and configurations. Through the mathematical fitting of circuit parameters, physical properties such as characteristic time constants and process efficiencies may be determined. For example, resistance-like elements may represent immediate responses or direct pathways, while capacitive and inductive elements may model processes involving energy storage, loss, transformed or delayed responses. Without being bound by theory, different combinations of these circuit elements may represent various physical phenomena such as carrier transport, trapping effects, and ionic motion. By analyzing the frequency-dependent transfer function using such equivalent circuit models, multiple processes occurring within the sample may be separated and quantified based on their characteristic responses.

By spatially resolving the directing of input light and/or the measuring of output light, properties of different sample locations may be analyzed. Through mapping of the modulated response across the sample surface, spatial variations in material characteristics may be identified. For example, scanning of a focused beam across different positions may enable high-resolution characterization of local properties, while wide-field illumination combined with spatially-resolved detection may allow simultaneous analysis of extended areas. By determining sample properties at each analyzed location, detailed information about material heterogeneity and spatial variations may be obtained. Through correlation of different measured characteristics, relationships between various properties may be mapped across the sample. For example, variations in phase shifts and amplitudes across different regions may reveal spatial patterns in carrier dynamics or ionic motion. Without being bound by theory, spatially-resolved measurements may be particularly valuable for analyzing heterogeneous materials, identifying localized defects or variations, and characterizing interfaces in layered structures. By combining spatial and temporal resolution, evolution of local properties under varying conditions may be tracked, providing insights into degradation mechanisms and performance limitations that may not be apparent from spatially-averaged measurements.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1A illustrates a method and system for analyzing a sample;
FIG 1B illustrates a modulated input component of input light directed onto the sample and a modulated output component of output light received from the sample;
FIG 2A illustrates exemplary input and output spectra showing spectral characteristics of the input light and output light;
FIG 2B illustrates time-dependent measurements of various characteristics including input intensity, output intensity, output spectral position, and output spectral width;
FIG 3 illustrates measurements of input intensity, output intensity, output spectral position, and output spectral width as functions of input modulation frequency;
FIG 4A illustrates measurement of output intensity phase relative to input intensity phase across different modulation frequencies;
FIG 4B illustrates measurement of output intensity amplitude relative to input intensity amplitude across different modulation frequencies;
FIG 5A illustrates relative phase and amplitude measurements of output spectral position relative to input intensity;
FIG 5B illustrates relative phase and amplitude measurements of output spectral position relative to output intensity;
FIG 5C illustrates relative phase and amplitude measurements of output spectral width relative to input intensity;
FIG 6A illustrates measurements of spectral position phase and amplitude for different input offset values;
FIG 6B illustrates measurements of spectral width phase and amplitude for different input offset values;
FIG 6C illustrates output intensity phase relative to input intensity measurements comparing thin film and single crystal samples at different input offset values;
FIG 7A illustrates a schematic model for analyzing light-sample interactions;
FIG 7B illustrates an equivalent circuit model for analyzing optical response;
FIG 7C illustrates frequency-dependent transfer function data fitted to the equivalent circuit model;
FIG 7D illustrates Nyquist plot representation of transfer function data fitted to the equivalent circuit model;
FIG 8A illustrates a system for analyzing a sample using multiple light sources and spatially-resolved detection;
FIG 8B illustrates a system for analyzing a sample using a single light source configuration.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

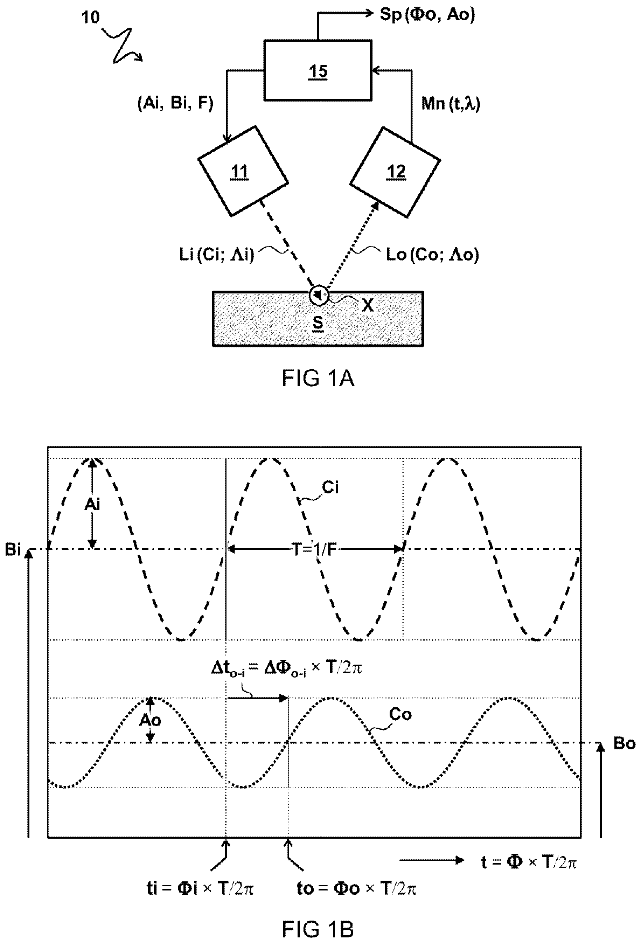

FIG 1A illustrates a method and system 10 for analyzing a sample "S". Input light "Li" is directed onto the sample "S". The input light "Li" includes at least one modulated input component "Ci". Output light "Lo" resulting from interaction "X" of the input light "Li" with the sample "S" is measured. The measured output light "Lo" includes at least one modulated output component "Co". The modulated output component "Co" varies as a function of time "t" depending on the interaction "X".

The system 10 comprises, or couples to, at least one light source 11 configured to generate the input light "Li" having at least one modulated input component "Ci". The system 10 further comprises, or couples to, at least one detector 12 configured to measure the output light "Lo" having at least one modulated output component "Co". The system 10 further comprises, or couples to, at least one controller 15 operatively coupled to the light source 11 and/or the detector 12. The at least one controller 15 may include one or more processors configured to control one or more input parameters (e.g. Ai, Bi, F) of the input light "Li" and/or to perform one or more measurements "Mn(t,λ)" of the output light "Lo", e.g. as a function of time "t", and preferably also wavelength "λ". The input light "Li" has an input spectrum "Ai", which may be controlled or fixed. The output light "Lo" has an output spectrum "Λo" which may be measured by the detector 12. Based on the measurements "Mn(t,λ)", the controller 15 is configured to determine, e.g. output, at least one property "Sp" of the sample "S" associated with the interaction "X". In particular, the controller 15 may determine the property "Sp" based on at least one of an output modulation phase "Φ₀" and an output modulation amplitude "Ao" of the at least one modulated output component "Co".

According to some aspects, the present teachings may be embodied as a computer program product, e.g. a (non-transitory) computer-readable medium storing instructions that, when executed by the least one processor of the system 10, causes the system 10 to perform any of the methods described herein. For example, the instructions may be stored on the controller 15 and/or the controller 15 may comprise or access the computer-readable medium.

In preferred embodiments, the directing of the input light "Li" and/or the measuring of the output light "Lo" is spatially resolved for analyzing different locations of the sample "S". Accordingly, the at least one property "Sp" of the sample "S" may be determined for each of the analyzed different locations. Alternatively, or in addition, measurements from different locations may be combined, e.g. to determine one or more properties of the sample "S". This spatial resolution may be achieved in different ways. In one embodiment, the system 10 includes means for scanning the input light "Li" and/or the output light "Lo". For example, the input light "Li" may be scanned across different positions of the sample "S", for example using a scanning mirror arrangement and/or by moving the sample relative to a fixed beam using a translation stage. In another or further embodiment, the output light "Lo" may be spatially scanned using a scanning mirror arrangement in the detection path and/or using a spatially scanning detector. In another embodiment, the system 10 employs wide field illumination wherein the input light "Li" simultaneously illuminates an extended area of the sample "S", and spatial resolution is achieved using a spatially resolving detector 12 such as a hyperspectral camera. The spatially resolved measurements may enable mapping of sample properties across the surface or through the depth of the sample, which may be particularly useful for analyzing heterogeneous materials, identifying localized defects or variations, and characterizing interfaces in layered structures.

FIG 1B illustrates further details of the at least one modulated input component "Ci" of the input light "Li" and the at least one modulated output component "Co" of the output light "Lo". For example, the modulated input component "Ci" is shown as an oscillating signal (dashed line) having an input modulation amplitude "Ai" around an input offset "Bi". The modulated output component "Co" is shown as an oscillating signal (dotted line) having an output modulation amplitude "Ao" around an output offset "Bo". As illustrated, the period "T" of oscillation is related to the modulation frequency "F" according to T=1/F. The relative timing between the input and output signals may be characterized by respective time points "ti" and "to" within the period, which may be expressed as phase angles "Φi" and "Φo" relative to the period (where t = Φ × T/2π). The output modulation phase "ΔΦo-i" may be determined based on the time difference between corresponding points in the input and output signals, for example expressed as a phase angle relative to the period (ΔΦo-i = 2π × Δt/T).

In one preferred embodiment, an output modulation phase "Φo" of the at least one modulated output component "Co" is determined based on the measured output light "Lo". In another or further preferred embodiment, an output modulation amplitude "Ao" of the at least one modulated output component "Co" is determined based on the measured output light "Lo". The sample "S" may be characterized based at least in part on at least one of the output modulation phase "Φo" and the output modulation amplitude "Ao". Accordingly, one or more properties "Sp" of the sample "S" may be determined. These one or more properties "Sp" may be associated with the interaction "X".

As described herein, the output light "Lo" may be measured as a function of time "t" by measuring one or more characteristics of the output light at different instances of time "t". At each instance of time "t", the one or more characteristics of the output light "Lo" may be measured and/or measurements may be accumulated during a respective time-window coinciding with a respective instance of time "t". Typically, this may include measurement of an intensity characteristic "Io" of the output light "Lo" as function of time. Alternatively, or in addition this may include measurement of a spectral characteristic of the output light "Lo" as function of time.

The interaction "X" between the input light "Li" and the sample "S" may include various physical phenomena that occur when light interacts with one or more materials of the sample "S". In preferred embodiments, the interaction "X" comprises photoluminescence, wherein the sample "S" absorbs incident photons and subsequently re-emits photons, typically at a different wavelength. In some embodiments, the interaction "X" may comprise reflection from the sample "S". In other or further embodiments, the interaction "X" may comprise transmission through the sample "S". In other or further embodiments, the interaction "X" may comprise scattering by materials and/or structures of the sample "S". In other or further embodiments, the interaction "X" may comprise absorption by materials and/or structures of the sample "S". In general, the interaction "X" may comprise combinations of these and other phenomena, such as photoluminescence combined with reflection, transmission, absorption, and/or scattering.

In some embodiments, a time scale of interactions and physical processes between absorption of input light "Li" and resulting emission of output light "Lo" may be quantified by measuring the output modulation phase "Φo". For example, the output modulation phase "Φo" of the at least one modulated output component "Co" may be associated with time delays arising between the absorption and emission of photons being affected by physical processes and characteristics of the sample "S". In other or further embodiments, an extent, efficiency, and/or other characteristics of various processes may be quantified by measuring the output modulation amplitude "Ao". For example, an amplitude of the at least one modulated output component "Co" may be associated with how effective, or how many, light induced processes take place within the sample "S", or in what way these processes take place.

In some embodiments, an amplitude and/or phase of a varying output light intensity is used to characterize material properties including one or more of a carrier lifetime, quantum efficiency, trap state density, recombination rates, and charge or ion transport properties. In other or further embodiments, an amplitude and/or phase of a varying spectral characteristic is used to characterize material properties including one or more of a composition changes, phase segregation, chemical reactions, and structural modifications within the sample "S". In one embodiment, an amplitude and/or phase of a varying spectral position is used to characterize material properties including one or more of bandgap changes, compositional gradients, and local environmental effects on the emission properties. In another or further embodiment, an amplitude and/or phase of a varying spectral width is used to characterize material properties including one or more of an energy disorder, heterogeneity of emissive states, and dynamic processes affecting the emission spectrum of the sample "S".

By varying a frequency "F" of the modulated input component "Ci", different types of processes occurring within the sample "S" may be probed. In preferred embodiments, processes occurring on microsecond to second timescales, preferably millisecond to second timescales, such as trapping and detrapping phenomena, may be probed using intermediate-frequency modulation, e.g. less than 100 kHz, preferably less than 10 kHz, most preferably less than 1 kHz. Also relatively slow processes occurring on timescales of seconds to hours, such as compositional changes or structural reorganization, may be investigated using low-frequency modulation, e.g. less than 100 Hz, less than 10 Hz, or even less than 1 Hz. For example, the measurements described herein have been taken with frequencies as low as 10⁻⁴ Hz (period of 10000 seconds) up to frequencies of 1 kHz. In principle, also processes occurring on nanosecond to microsecond timescales, such as electronic carrier dynamics, may be studied, e.g. using high-frequency modulation of more than 100 kHz.

By probing over a range of modulation frequencies, different combinations of processes characterizing the sample "S" may be isolated and characterized based on their characteristic timescales. Without being bound by theory, this frequency-dependent response may enable detailed investigation of various physical and chemical processes that may affect the sample's optical properties across different temporal domains. For example, in perovskite materials, processes ranging from rapid carrier recombination to slow ionic motion can be distinguished and analyzed by appropriate choice of the modulation frequency.

In a preferred embodiment, the sample "S" comprises a luminescent material. Accordingly, the measured output light "Lo" may comprise a photoluminescent response of the luminescent material to the input light "Li" and the at least one modulated output component "Co" may comprise a modulated characteristic of the photoluminescent response. For example, the sample "S" comprises a fluorescent material and the measured output light "Lo" comprises a fluorescent response. For example, the sample "S" comprises a phosphorescent material and the measured output light "Lo" comprises a phosphorescent response.

In a preferred embodiment, the sample "S" comprises at least one semiconductor material. It will be appreciated that the present methods and systems may provide unique insights into semiconductor-specific properties and processes. For example, unlike simple luminescent materials where emission may primarily depend on localized electronic transitions, semiconductors can exhibit complex interactions between free carriers, band structure, and material properties. For example, the methods and systems described herein can probe semiconductor-specific characteristics including, but not limited to: band-to-band and trap-assisted recombination processes; carrier transport and diffusion; band filling effects and bandgap renormalization; deep level defect states; dopant and impurity effects; and in the case of compound semiconductors, compositional variations and phase segregation. Without being bound by theory, the modulated characteristics of the output light "Lo" may be particularly sensitive to these semiconductor properties because the photoluminescence process involves delocalized charge carriers that can interact with the crystal lattice, respond to local electric fields, and participate in various scattering and recombination pathways before emission occurs. The methods and systems described herein may be especially advantageous for characterizing complex semiconductor systems such as perovskites, where electronic properties may be strongly coupled to ionic motion and structural changes.

In a preferred embodiment, the sample "S" comprises a perovskite material, most preferably metal halide perovskite. For example, metal halide perovskite may be characterized by the formula "ABX₃", wherein "A" comprises at least one of methylammonium, formamidinium, or cesium, "B" comprises lead or tin, and "X" comprises at least one halide selected from iodide, bromide, or chloride. In one embodiment, the response may include both semiconductor characteristics and strong luminescent properties. In another or further embodiment, the modulated characteristic may comprise responses associated with ionic motion and compositional changes within the material. As will be appreciated, the trap-mediated transition response may be particularly relevant for characterizing defect states and impurities within the semiconductor material, especially in perovskite materials where ion migration can create dynamic defect states.

In some embodiments, the sample "S" comprises a stack of two or more layers. Adjacent layers may comprise different types of materials. Preferably at least one of the layers is formed of a semiconductor material. In one embodiment, the sample "S" comprises at least one semiconductor layer in combination with one or more metallic contact layers. In another or further embodiment, the sample "S" comprises at least one semiconductor layer in combination with one or more passivating layers, wherein the passivating layer may comprise a dielectric or insulating material. In embodiments where multiple semiconductor layers are present, adjacent semiconductor layers may have different bandgaps, different doping types, and/or different doping concentrations. In particular, a respective interface between different semiconductor layers may form a heterojunction. In one embodiment, the sample "S" comprises at least one p-n junction formed between semiconductor regions of different doping types. For example, the p-n junction may comprise a junction between p-type and n-type regions of the same semiconductor material. In another or further embodiment, the p-n junction may comprise a heterojunction between different semiconductor materials. For example, the junction may comprise one of: a p-n junction, a p-i-n junction, or a buried junction. Also other types of junctions may be present and/or a combination different types of junctions may be present in the sample "S".

In preferred embodiments where the sample "S" comprises a heterojunction between different semiconductor layers, the methods and systems described herein may provide unique insights into interface-specific phenomena and inter-layer interactions that cannot be probed in single-layer samples. For example, the modulated characteristics of the output light "Lo" may reveal processes including, but not limited to: charge transfer rates across the heterojunction interface; band alignment and band bending effects; interface state formation and recombination; carrier accumulation at interfaces; and electric field distributions between layers. In one embodiment, the response may include characteristics of both bulk recombination within individual layers and interface-mediated recombination between layers. In another or further embodiment, the modulated characteristic may comprise responses associated with band offset modifications, interface dipole formation, and charge redistribution across the heterojunction. Without being bound by theory, the time-dependent response may be particularly sensitive to these interface phenomena because carriers generated in one layer may need to overcome potential barriers, traverse the interface region, and interact with states or carriers in the adjacent layer before recombination occurs. As will be appreciated, these interface-specific processes may be especially relevant for characterizing and optimizing heterojunction devices such as solar cells, where interface quality and band alignment can strongly influence overall device performance.

In a preferred embodiment, the sample "S" comprises a photovoltaic device and/or material(s) used in the construction thereof. In particular, perovskite solar cells may represent a promising emerging photovoltaic technology, e.g., due to their exceptional light absorption properties, long carrier diffusion lengths, and rapidly improving power conversion efficiencies. Using the methods and systems described herein, perovskite-based solar cells may be characterized during various stages of fabrication, including characterization of the perovskite absorber layer itself, interfacial layers such as electron and hole transport materials, and complete device stacks. For example, the methods and systems may be used to probe ionic motion in metal halide perovskites, carrier dynamics at interfaces between the perovskite and transport layers, and degradation mechanisms in partially or fully completed devices. For example, the methods and systems may be particularly useful for studying mixed-halide perovskite compositions, where phenomena such as light-induced halide segregation can be monitored through spectral shifts in the photoluminescence. Also, other or further types of perovskite materials may be characterized, such as oxide perovskites for ferroelectric photovoltaics or chalcogenide perovskites being developed as alternatives to metal halides.

Also other or further materials used for photovoltaic devices may be analyzed. In some embodiments, the photovoltaic device under investigation may comprise selective contact layers for electron and hole extraction. For example, the photovoltaic device may comprise buffer layers, transport layers, and/or blocking layers. As will be appreciated, the method may be particularly useful for characterizing interfacial recombination processes, charge transport across selective contacts, and degradation mechanisms affecting device stability.

Also other or further types of devices and/or materials may be analyzed. In some embodiments, the sample "S" comprises a light-emitting device and/or material(s) used in the construction thereof. For example, the light-emitting device may comprise a light-emitting diode LED or a laser diode. For example, the method may be particularly useful for characterizing carrier injection efficiency, radiative recombination rates, and device degradation mechanisms. In other or further embodiments, the sample "S" comprises a photodetector device and/or material(s) used in the construction thereof. For example, the photodetector may comprise a photodiode, a phototransistor, or an imaging sensor. For example, the method may be particularly useful for characterizing response speed, quantum efficiency, and noise characteristics.

In some embodiments, the sample "S" comprises a memristive material and/or device exhibiting memory effects in its optoelectronic properties. For example, the sample "S" may comprise materials or devices whose photoluminescent response depends on prior illumination conditions or other historical states. In one embodiment, the phase delay between input modulation and output response may be used to characterize how the material retains information about previous states. In another or further embodiment, the amplitude response may reveal how the material's optical properties are modified by its history. For example, these memory effects may arise from various physical mechanisms such as trapped charge states, ionic redistribution, or structural modifications that persist after the initial stimulus. For example, in materials exhibiting both memristive and luminescent properties, the modulated characteristic may comprise responses associated with the interplay between electronic memory effects and optical processes. The method may also be particularly useful for studying materials and devices where electrical and optical properties are coupled through persistent changes in material structure or composition, enabling investigation of how memory effects influence and are influenced by photophysical processes.

As will be appreciated, the present methods and systems may be performed at one or more different stages of device fabrication, including characterization of individual semiconductor materials before incorporation into a device; and/or analysis of partial layer stacks during sequential deposition of device layers; and/or testing of complete devices before and/or after formation of electrical contacts. For example, the present methods and systems may be used to characterize properties of a semiconductor layer immediately after its deposition, before subsequent processing steps. For example, the present methods and systems may be used to analyze interfaces between layers as they are formed during device fabrication. For example, the present methods and systems may be used to study various characteristics of complete or incomplete devices, allowing identification of which processing steps or interfaces may contribute to device instability.

Unlike electrical impedance spectroscopy, which requires completed devices with electrical contacts, the present methods and systems may enable characterization of materials and devices at any stage of fabrication. This may be particularly advantageous for optimizing individual processing steps, for identifying issues at specific interfaces as they are formed, and for understanding how different fabrication stages affect the final device performance. For example, the method may be implemented as an in-line characterization technique during roll-to-roll or sheet-to-sheet fabrication processes. For example, the method may be used for quality control of individual layers before proceeding with subsequent processing steps.

In some embodiments, the method is performed in-line during a manufacturing process of a photovoltaic or other device. In one embodiment, the manufacturing process is adapted based on the analysis, e.g. based on the determined at least one property "Sp" of the sample "S". For example, one or more process parameters may be adjusted in response to detected deviations from target properties, such as adjusting deposition conditions, annealing temperatures, layer thicknesses, or material compositions. In another or further embodiment, the analysis may be used to identify defective regions or layers that should be removed from the production line. For example, samples exhibiting anomalous phase shifts or amplitudes indicating incomplete transformation, excessive trap formation, or premature degradation may be discarded before further processing. In another or further embodiment, the analysis may be used to optimize process conditions in real-time, such as adjusting precursor ratios, environmental conditions, or treatment durations based on measured material properties. For example, the duration of a particular processing step may be extended or shortened based on monitoring the progression of relevant transformation processes through their characteristic spectral or intensity responses.

As will be appreciated, the ability to monitor material properties in real-time during manufacturing may enable dynamic process control to maintain optimal conditions throughout device fabrication. By detecting and responding to undesirable changes before they lead to device failure, manufacturing yield and consistency may be improved. For example, the observation of characteristic signatures in the modulated response associated with beneficial or detrimental material changes may provide early warning of potential issues, enabling preemptive process adjustments. Through systematic correlation between measured properties and final device performance, specific indicators or threshold values may be established for quality control decisions during production.

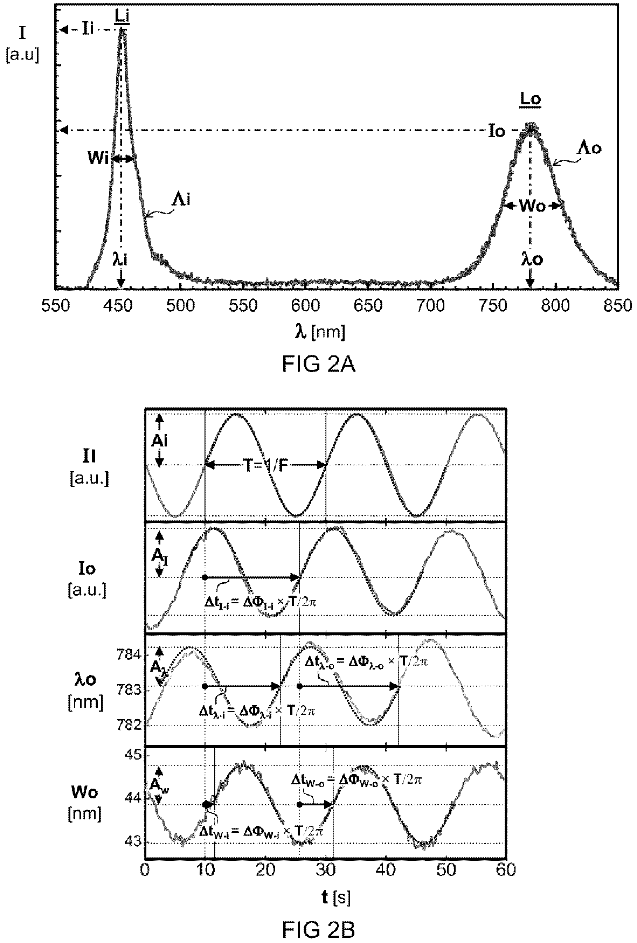

FIG 2A illustrates an exemplary input spectrum "Ai" of the input light "Li" and output spectrum "Λo" of the output light "Lo". The input spectrum "Ai" has a spectral peak at a wavelength "λi" with an intensity "Ii". The output spectrum "Λo" has a spectral peak at a wavelength "λo" of with an intensity "Io". The output spectrum "Λo" has a spectral width "Wo" indicative of the distribution of emission wavelengths. The significant wavelength difference between the input and output spectral peaks (Stokes shift) is characteristic of photoluminescence, wherein the sample absorbs light at a shorter wavelength and re-emits at a longer wavelength. The relative intensities "Ii" and "Io" as well as the spectral characteristics such as the output spectral position "λo" and output spectral width "Wo" may vary as a function of time depending on the interaction "X" between the input light "Li" and the sample "S".

Typically, the measured output light "Lo" has a different spectrum than the input light "Li". Typically, photoluminescence involves the absorption of light followed by nonradiative relaxation processes that lead to a red-shifted (lower energy) emission relative to the excitation (Stokes shift). Similarly, down-conversion mechanisms and thermalization, which may involve the emission of one or more photons for every photon absorbed, can produce an emission at a wavelength that is red-shifted relative to the individual excitation wavelengths. However, there may also be cases where the emission can occur at the same or similar wavelength as the absorbed light such as in resonance fluorescence; or the wavelength may even be blue-shifted. For example, anti-Stokes luminescence may occur when additional energy, e.g. often derived from thermal excitation, is incorporated during the emission process, resulting in the output of photons with higher energy (shorter wavelength) than the absorbed ones. Similarly, up-conversion mechanisms, which may involve the sequential absorption of two or more low-energy photons, can produce an emission at a wavelength that is blue-shifted relative to the individual excitation wavelengths.

In some embodiments, the at least one modulated output component "Co" comprises a time-varying intensity characteristic Io(t) of the output light "Lo". For example, the intensity characteristic may be based on a total measured intensity of the output light "Lo" at a respective time "t". Alternatively, or in addition, the intensity characteristic may be based on a peak intensity of an output spectrum of the measured output light "Lo" at a respective time "t". Also other measured characteristics of the output light "Lo" may be associated or correlated with the time-varying intensity characteristic.

FIG 2B illustrates time-dependent measurements of various characteristics of the input light "Li" and output light "Lo". The top panel shows the modulated input intensity "Ii" varying sinusoidally with an amplitude "Ai" and period T=1/F, where F is the modulation frequency. The second panel shows the corresponding output intensity "Io" varying with amplitude "AI" and exhibiting a time delay "ΔtI-i" relative to the input modulation, which can be expressed as a phase shift "ΔΦI-i × T/2π". The third panel shows the time-varying output spectral position "λo" oscillating around 783 nm with amplitude "Aλ", exhibiting time delays "Δtλ-i" relative to the input intensity and "Δtλ-o" relative to the output intensity, which can be expressed as phase shifts "ΔΦλ-i × T/2π" and "ΔΦλ-o × T/2π" respectively. The bottom panel shows the time-varying output spectral width "Wo" oscillating around 44 nm with amplitude "AW", exhibiting time delays "ΔtW-i" relative to the input intensity and "ΔtW-o" relative to the output intensity, which can be expressed as phase shifts "ΔΦW-i × T/2π" and "ΔΦW-o × T/2π" respectively. These various time delays and phase relationships between different characteristics may provide information about different physical processes occurring within the sample "S".

In a preferred embodiment, e.g. as shown in the top panel of FIG 2B, the modulated input component "Ci" includes an intensity modulation of the input light "Li". For example, the power per unit surface of the sample being illuminated by the input light "Li" is varied as function of time. Also other or further types of modulation of the input light "Li" may be envisioned such as wavelength modulation of the input light "Li", focal spot size of the input light "Li", and/or polarization modulation of the input light "Li"

In some embodiments, e.g. as shown in the second panel of FIG 2B, the output modulation amplitude "Ao" of the at least one modulated output component "Co" is based on measurement of the amplitude "A_{I}" of the modulation of the output intensity "Io" of the output light "Lo". In other or further embodiments, the output modulation phase "Φo" of the at least one modulated output component "Co" is based on measurement of the timing and/or phase "Φ_{I}" of the modulation of the output intensity "Io".

In preferred embodiments, the measured output light "Lo" is spectrally resolved. For example, the output light "Lo" is measured as a function of time "t" at two or more distinct wavelengths or wavelength ranges. Most preferably, an output spectrum "Λo" of the output light "Lo" is measured as a function of time "t". Accordingly, the at least one modulated output component "Co" may comprise a time-varying spectral characteristic "Λo(t)" of the output light "Lo", i.e. time-varying characteristic of the output spectrum "Λo". For example, the spectral characteristic of the output light "Lo" at a respective instance of time "t" may be based on spectrally resolved measurement of the output light "Lo" within a respective time window coinciding with the respective instance of time "t". In one embodiment, the output modulation amplitude "Ao" is based on measurement of an amplitude of the modulation of a spectral characteristic of the output spectrum "Λo". In another or further embodiment, the output modulation phase "Φo" is based on measurement of a phase of the modulation of a spectral characteristic of the output spectrum "Λo".

In some embodiments, the at least one modulated output component "Co" comprises a time-varying spectral position "λo(t)" of the output light "Lo". For example, the spectral position "λo" may be quantified as the wavelength position of a peak or average of the output spectrum "Λo", or any other positional characteristic of the output spectrum "Λo", e.g. position or offset parameter of a fitted spectral peak such as a Gaussian or Lorentzian peak. In one embodiment, e.g. as shown in the third panel of FIG 2B third graph, the output modulation amplitude "Ao" of the at least one modulated output component "Co" is based on measurement of the amplitude "A_{λ}" of the modulation of the output spectral position "λo" of the output light "Lo". In another or further embodiment, the output modulation phase "Φo" of the at least one modulated output component "Co" is based on measurement of the timing and/or phase "Φ_{λ}" of the modulation of the output spectral position "λo".

In other or further embodiments, the at least one modulated output component "Co" comprises a time-varying spectral width Wo(t) of the output light "Lo". For example, the spectral width "Wo" may be quantified as the full width at half maximum (FWHM) of the output spectrum "Λo", or any other width characteristic of the output spectrum "Λo", e.g. width parameter of a fitted spectral peak such as a Gaussian or Lorentzian peak. In one embodiment, e.g. as shown in the fourth (bottom) panel of FIG 2B, the output modulation amplitude "Ao" of the at least one modulated output component "Co" is based on measurement of the amplitude "Aw" of the modulation of the output spectral width "Wo" of the output light "Lo". In another or further embodiment, the output modulation phase "Φo" of the at least one modulated output component "Co" is based on measurement of the timing and/or phase "Φ_{W}" of the modulation of the output spectral width "Wo". Also other or further spectral characteristics may be measured such as an asymmetry of the spectral peak.

In some embodiments, the output light "Lo" is detected as a function of time "t" in synchronization with the modulated input component "Ci". Accordingly, the output modulation phase "Φo" may be determined based on a shift in time "t" of the at least one modulated output component "Co" relative to the modulated input component "Ci". For example, a measurement time "t" associated with time-dependent measurement of the output light "Lo" is synchronized relative to the timing of a known modulation being applied to the input light "Li". Alternatively, or in addition this may be based on simultaneous measurement of the input light "Li", in particular the modulated input component "Ci".

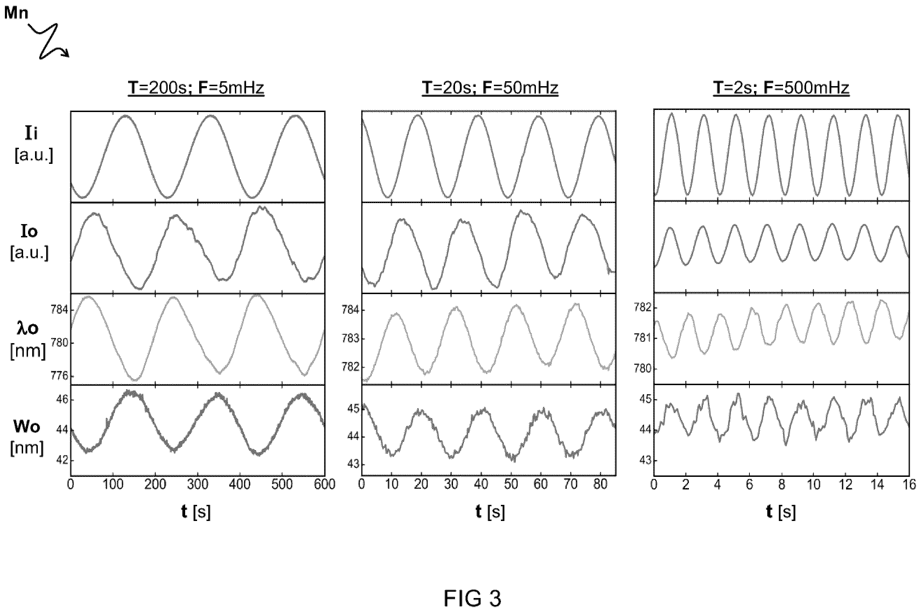

Synchronization with the modulated input component "Ci" may not always be necessary. For example, such synchronization may be unnecessary in embodiments, where only the output modulation amplitude "Ao" is determined. Such synchronization may also be unnecessary in embodiments, wherein the output modulation phase of a first modulated output component in the output light "Lo" is determined relative to a second modulated output component in the output light "Lo". For example, the output modulation phase can be determined between any of two of the time-varying intensity characteristics "Io(t)", the time-varying spectral position "λo(t)", and the time-varying spectral width "Wo(t)". As shown in FIGs 2B and 3, each time varying characteristic may have a distinct (relative) phase, which may be used to characterize respective properties of the sample. Also other or further time-varying characteristics of the output light "Lo" and/or input light "Li" can be determined as well as relative phases there between.

In a preferred embodiment, the input light "Li" is modulated according to a periodic function. For example, the periodic function has one or more oscillating components. Typically, the input light "Li" has an oscillating intensity component. In principle, the input light "Li" may also have other or further oscillating components such as an oscillating spectral component. Most preferably the periodic function is a sine wave function. In other words, the modulated input component "Ci" can be sine wave modulation, typically a sine wave intensity modulation. In principle, also other periodically varying functions can be used such as a sawtooth.

For a known wave function with known input modulation frequency "F", to sufficiently characterize the at least one modulated output component "Co" for the purpose of determining the output modulation amplitude "Ao" and/or output modulation phase "Φo", typically at least two measurements of the output light "Lo" at different instances of time are needed (at least if the time between measurements is not equal to the period T=1/F of the periodic function). Of course many more measurements within one period, or over multiple periods, can be taken to improve accuracy. To obtain sufficient statistics, preferably each iteration includes multiple measurements during at least one period T=1/F, more preferably during at least five periods (5T), most preferably at least ten periods (10T). Alternatively, it may be sufficient to perform measurements during only part of a period, e.g. a half period to determine a minimum and maximum intensity of the output light "Lo"; or even shorter to determine the phase shift of a known function.

Various frequency ranges may be selected to match characteristic timescales of different processes occurring within the material. In preferred embodiments, the input component "Ci" is modulated with a frequency "F" less than 100 kHz to probe various physical, chemical and electronic processes within the sample. For example, this frequency range may be particularly suited for investigating relevant processes such as trap-mediated processes, ionic motion, and material transformation mechanisms that often limit the performance and stability of semiconductor devices. Without being bound by theory, these relatively slow processes may be particularly important in complex materials such as metal halide perovskites where multiple mechanisms spanning different timescales can interact to influence material properties. The ability to probe these slower dynamics with high precision may provide unique insights into degradation pathways, ion migration effects, and structural changes that are challenging to observe using other methods.

In some embodiments, the input component "Ci" is modulated including frequencies in a range between 1 kHz and 100 kHz to probe intermediate-speed processes occurring over timescales of 10 microseconds to 1 millisecond. For example, this frequency range may be suited for studying trap-mediated carrier dynamics. In one embodiment, the amplitude and phase of the time-varying intensity characteristic Io(t) are measured to determine properties including one or more of: trap-assisted recombination rates, carrier trapping cross-sections, and surface recombination velocities. For example, characteristic plateaus in the amplitude response may indicate trap state filling. In another or further embodiment, spectral measurements may reveal carrier-lattice interactions and localized electronic states.

In other or further embodiments, the input component "Ci" is modulated including frequencies in a range between 1 Hz and 1 kHz to probe moderately slow processes occurring over timescales of 1 millisecond to 1 second. For example, this frequency range may be suited for studying deep trap states and initial ionic effects. In one embodiment, the amplitude and phase of the time-varying intensity characteristic Io(t) are measured to determine properties including one or more of: deep trap state dynamics, surface state occupation, and onset of ionic motion effects. For example, the phase shift may increase significantly when ion motion begins influencing recombination dynamics. In another or further embodiment, spectral characteristics are measured to analyze early-stage compositional changes and structural modifications.

In other or further embodiments, the input component "Ci" is modulated including frequencies in a range between 1 mHz and 1 Hz to probe very slow processes occurring over timescales of 1 second to 1000 seconds, or more. For example, this frequency range may be suited for studying chemical and structural evolution of the sample. In one embodiment, the amplitude of the time-varying intensity characteristic Io(t) is measured to determine properties including one or more of: ion migration rates, chemical reaction kinetics, phase transformation processes, and material degradation pathways. For example, systematic changes in the amplitude response may track progressive material aging or environmental interactions. In another or further embodiment, the phase of the time-varying spectral position "λo(t)" is measured to analyze compositional evolution, wherein phase relationships between spectral shifts and intensity changes may reveal sequences of ionic and structural transformations. In another or further embodiment, the spectral width Wo(t) is measured to monitor heterogeneity development, wherein increasing width may indicate growing disorder during aging or phase segregation. In some embodiments, measurements may be extended to even lower frequencies, for example down to the µHz range, to study very slow processes such as day-night cycling effects. However, measurement times longer than 24 hours may become impractical for most applications.

In principle, the input component "Ci" may also be modulated at frequencies above 100 kHz to probe faster processes. For example, modulation frequencies between 100 kHz and 1 MHz may be used to study carrier transport and recombination dynamics, while frequencies above 1 MHz may enable investigation of rapid carrier processes such as band-to-band recombination and carrier cooling. However, it will be understood that the present teachings are particularly advantageous for analyzing slower processes below 100 kHz that are more challenging to characterize using conventional techniques.

The combination of different frequency ranges may enable comprehensive characterization of multiple processes occurring within the sample. For example, combining high and low frequency measurements can provide complementary information about how rapid electronic processes interact with slower ionic and structural changes. Without being bound by theory, this multi-timescale approach may be particularly valuable for understanding complex semiconductor systems where fast carrier dynamics can influence, and be influenced by, slower material transformations, such as in metal halide perovskites where electronic, ionic, and structural properties are strongly coupled.

In some embodiments, the sample "S" is analyzed by performing a series of measurements "Mn", wherein between one iteration of the series of measurements "Mn" to another iteration, at least one input parameter Ai,Bi,F of the input light "Li" is changed (and then held constant during the respective iteration). In one embodiment, an input modulation frequency "F" of the modulated input component "Ci" is changed between different iterations of the series of measurements "Mn". In another or further embodiment, an input modulation amplitude Ai of the modulated input component "Ci" is changed between different iterations of the series of measurements "Mn". In another or further embodiment, an input offset "Bi" added to the modulated input component "Ci" is changed between different iterations of the series of measurements "Mn". In another or further embodiment, an input spectrum "Ai" of the modulated input component "Ci" is changed between different iterations of the series of measurements "Mn". For example, the input (central or peak) wavelength "λi" may be varied, or any other feature of the input spectrum. The at least one property of the sample "S" may be determined based on the measured modulation amplitude "Ao" and/or phase shift "Φo" as function of the varied one or more of these or other input parameters of the input light "Li".

FIG 3 illustrates a series of measurements "Mn" wherein each of the input intensity "Ii", output intensity "Io", output spectral position "λo", and output spectral width "Wo", are measured for different input modulation frequency "F". It will be appreciated that each of these measurements may exhibit different relative amplitudes and phases enabling unique characterization of various properties "Sp" of the sample "S" under investigation.

In a preferred embodiment, the output modulation amplitude "Ao" is determined relative to the (varied) input modulation amplitude "Ai". However, in principle it is not necessary to measure this relatively, e.g. if the input modulation amplitude "Ai" is fixed and/or known. The input modulation amplitude "Ai" can be measured or predetermined based on light source setting. In some embodiments, the at least one property "Sp" is determined based on a ratio between the output modulation amplitude "Ao" and input modulation amplitude Ai. Alternatively, or in addition, the at least one property "Sp" is determined based on a ratio between different output modulation amplitudes "Ao".

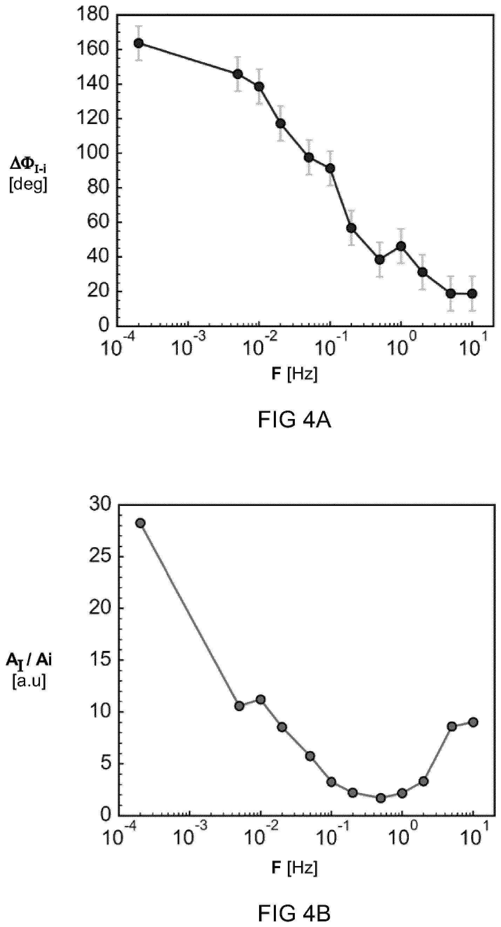

In a preferred embodiment, e.g. as shown in FIG 4A, the output intensity phase "Φ_{I}" is measured relative to the input intensity phase "Φi", e.g. by taking the input-output intensity phase difference "ΔΦ_{I-i}" = "Φi" - "Φi". As shown, the phase difference may be measured of a range of different frequencies "F" of the input intensity modulation "Ii". This may reveal unique characteristics of the material such as the dependence of the relative phase as function of frequency. In another or further preferred embodiment, e.g. as shown in FIG 4B, the output intensity amplitude "A_{I}" is measured relative to the input intensity amplitude "Ai", e.g. by taking the ratio "A_{I}"/"Ai". This can be measured at the same frequencies "F". This may reveal unique characteristics of the material such as the dependence of the relative output light intensity as function of frequency.

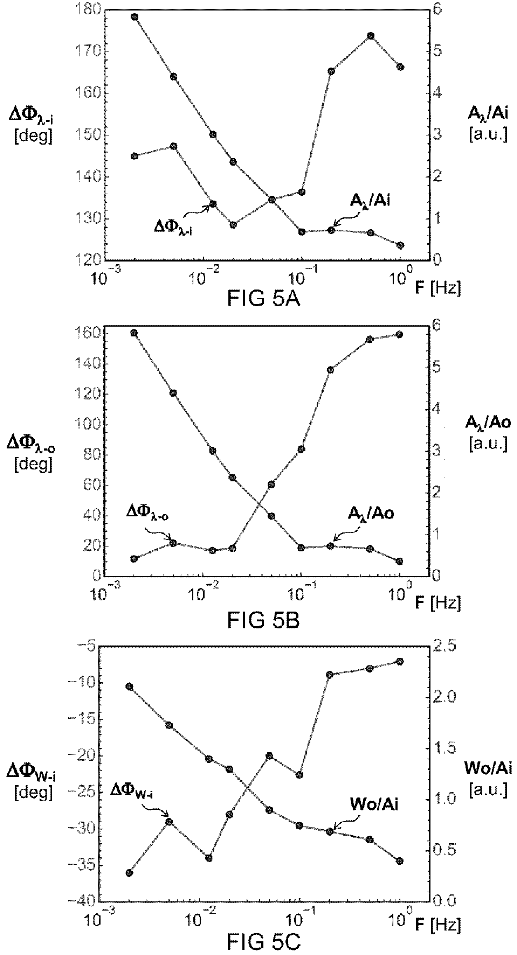

Also other relative amplitudes and/or phases may be determined, e.g. between different characteristics of the output light "Lo". In one embodiment, e.g. as shown in FIG 5A, the relative phase "ΔΦ_{λ-i}" and amplitude "A_{λ}"/"Ai" of the time-varying output spectral position "λo" of the output light "Lo" relative to the input intensity "Ii" of the input light "Li" is measured and may be used to characterize the sample. In another or further embodiment, e.g. as shown in FIG 5B, the relative phase "ΔΦ_{λ-o}" and amplitude "A_{λ}"/"Ao" of the time-varying output spectral position "λo" of the output light "Lo" relative to the output intensity "Io" of the output light "Lo" is measured and may be used to characterize the sample. In another or further embodiment, e.g. as shown in FIG 5C, the relative phase "ΔΦ_{W-i}" and amplitude "A_{W}"/"Ai" of the time-varying output spectral width "Wo" of the output light "Lo" relative to the input intensity "Ii" of the input light "Li" is measured and may be used to characterize the sample.

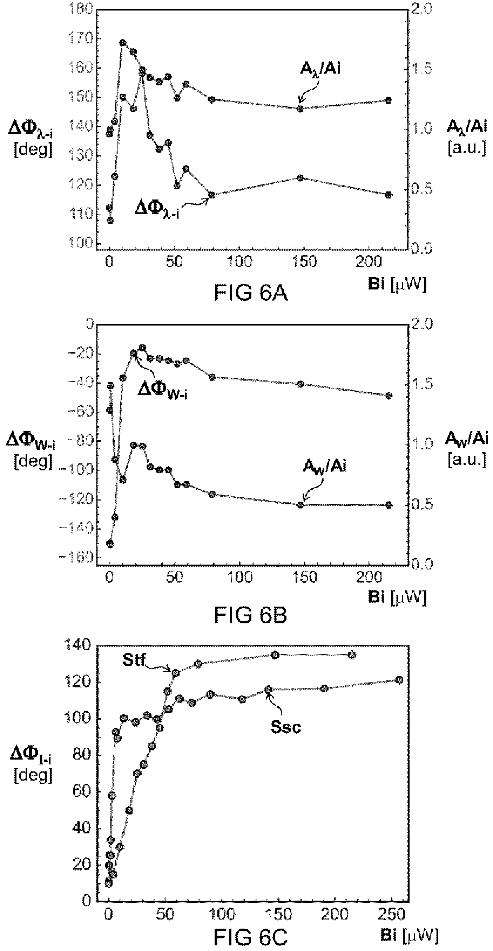

Alternatively, or in addition to varying the input modulation frequency "F" over a series of measurements "Mn", also other or further characteristics of the input light "Li" may be varied. For example, FIGs 6A -6C illustrate series of measurements "Mn", wherein the input offset "Bi" of the input light "Li" is varied. For example, as was illustrated in FIG 1B, the input offset "Bi" may comprise DC intensity or average illumination level of the sample "S", wherein the modulation "Ci" (AC intensity) takes place around this average.

In one embodiment, e.g. as shown in FIG 6A, the relative phase "ΔΦ_{λ-i}" and amplitude "A_{y}"/"Ai" of the time-varying output spectral position "λo" of the output light "Lo" relative to the input intensity "Ii" of the input light "Li" is measured for different values of the input offset "Bi". For example, this graph shows an initial sharp increase in both phase shift ΔΦλ-i and relative amplitude Aλ/Ai at low input offset powers, reaching a peak around 20-30 µW, followed by a decline and eventual plateau. Without being bound by theory, this behavior may reveal material characteristics such as initial sensitivity to carrier density at low illumination; possible saturation of trap states or band-filling effects at the peak; stabilization of spectral response at higher carrier densities; a characteristic carrier density where band renormalization effects become significant.

In another or further embodiment, e.g. as shown in FIG 6B, the relative phase "ΔΦ_{W-i}" and amplitude "A_{W}"/"Ai" of the time-varying output spectral width "Wo" of the output light "Lo" relative to the input intensity "Ii" of the input light "Li" is measured for different values of the input offset "Bi". For example, this graph shows opposite phase behavior compared to spectral position, exhibiting negative values and a similar sharp transition around 20-30 µW but in negative direction. Without being bound by theory, this behavior may reveal material characteristics such as spectral broadening occurring out of phase with input modulation; possible correlation with energy disorder or carrier temperature effects; competition between different broadening mechanisms at different carrier densities; and saturation behavior that could indicate filling of available energy states.

In another or further embodiment, e.g. as shown in FIG 6C, the relative phase "ΔΦI-i" of the time-varying output intensity "Io" of the output light "Lo" relative to the input intensity "Ii" of the input light "Li" is measured for different values of the input offset "Bi". For example, this figure demonstrates the same series of measurements "Mn" for different samples, where the graph "Stf" corresponds to a thin film sample, and the graph "Ssc" corresponds to a single crystal sample. Both samples show an initial increase in phase shift with offset power, wherein the thin film reaches saturation faster and at a higher phase shift value, while the single crystal shows a more gradual increase and lower final phase shift. Without being bound by theory, these differences may reveal fundamental variations in recombination pathways, wherein the thin film response may indicate a higher density of trap states and defects, while the single crystal response may indicate more uniform carrier dynamics due to better crystallinity.

It will be understood that, to characterize a sample "S", in general, any combination of relative amplitudes and/or phases between any input characteristic and output characteristic, and/or between different output characteristics may be used. For example, the relative amplitude and/or phase may be taken between any two of the input intensity "Ii", output intensity "Io", output spectral position "λo", output spectral width "Wo", and any other time-varying characteristic of the input light and/or output light. Furthermore, these relative amplitudes and/or phases may be measured in a series of measurements "Mn" while varying one or more input parameters such as the input modulation frequency "F", input modulation amplitude Ai, input offset "Bi", etcetera.

In some embodiments, at least one property "Sp" and/or characterization of the sample "S" is determined based on a relative amplitude or phase between modulation of an intensity characteristic "Io" of the measured output light "Lo" and a characteristic "Ii" of the input light "Li". In other or further embodiments, at least one property "Sp" and/or characterization of the sample "S" is determined based on a relative amplitude or phase between modulation of a spectral characteristic Λo of the measured output light "Lo" and a characteristic "Ii" of the input light "Li". In other or further embodiments, at least one property "Sp" and/or characterization of the sample "S" is determined based on a relative amplitude or phase between the modulation of an intensity characteristic "Io" of the measured output light "Lo" a spectral characteristic Λo of the measured output light "Lo".

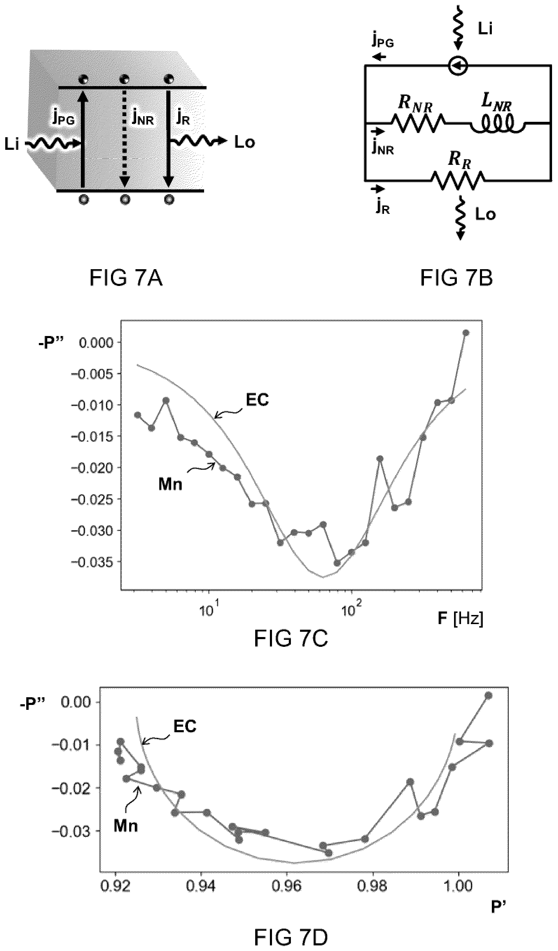

FIG 7A illustrates a schematic representation of a model for analyzing the interaction between input light "Li" and the sample to produce output light "Lo". In the example shown, the model may represent how incident photons generate charge carriers (represented by photogenerated current j_{PG}) which can follow different pathways within the sample, including non-radiative processes (represented by current j_{NR}) and radiative processes (represented by current j_{R}) that result in the measured output light "Lo".

For example, in a simple semiconductor model where incident light "Li" generates free photogenerated charges, photogenerated current j_{PG} may be represented by the formula: ${j}_{PG} = a {η}_{sep} e Ii$ where "*a*" is the absorptance, *"ηₛₑₚ"* the separation efficiency, "e" the electron charge, and "Ii" the input light intensity. If the device is not externally connected, all photogenerated charges must recombine, either non-radiatively (*j_{NR}*) or radiatively (*j_{R}*): ${j}_{PG} = {j}_{NR} + {j}_{R}$ The radiative recombination current is then proportional (*η_{det}*) to the intensity "Io" of the output light, that is detected: ${η}_{det} {j}_{R} = e Io$

Without being bound by theory, these or other modelling may enable quantitative analysis of the sample's response to modulated input light. For example, the relative amplitudes and phases of the modulated output components may be fitted to this model using a set of fitting parameters. These fitting parameters may represent various physical properties of the sample such as recombination rates, trap state densities, carrier lifetimes, and other characteristics that influence the interaction between light and the sample material. In some embodiments, the model may be used to extract quantitative values for these physical properties by comparing measured output modulation phases and amplitudes with theoretical predictions of the model across different measurement conditions (e.g., different modulation frequencies, intensities, or other varied parameters). In other or further embodiments, the model may provide a framework for interpreting how different physical processes within the sample affect the measured output light characteristics, particularly the phase shifts and amplitude changes that occur in response to the modulated input light. By fitting experimental data to the model, properties of the sample that are not directly observable may be determined from the measured optical response.

FIG 7B illustrates an example of equivalent circuit modeling to analyze the sample's optical response. As known from impedance spectroscopy, complex dynamic systems can be represented by circuits of basic electronic elements such as resistors, capacitors, and inductors, where each element or combination of elements represents a distinct physical process occurring in the system. In general, the equivalent circuit approach may provide a mathematical framework for analyzing and quantifying the dynamic optical response of the sample using established analysis methods adapted from impedance spectroscopy.

In the present example, the model may represent the relation between input light "Li" and output light "Lo" using circuit elements there between. In this example, "R_{R}" represents a radiative pathway characterized by resistance-like behavior, while the parallel branch comprising R_{NR} and L_{NR} represents a non-radiative pathway exhibiting both resistance-like and inductance-like characteristics. The currents "j_{R}" and "j_{NR}" may represent the distribution of excitation between these pathways.

In general, different types of circuit elements may be used to model various physical processes occurring in the sample. In some embodiments, resistance-like elements (R) may represent immediate responses or direct pathways between input and output, such as instantaneous radiative recombination or other processes without inherent time delay. For example, R_{R} may represent direct band-to-band recombination resulting in photoluminescence. In other or further embodiments, inductance-like elements (L) may represent processes exhibiting delayed response or memory effects, wherein the system's response lags behind the input modulation. For example, L_{NR} may represent trap-mediated processes where carriers require time to be captured and released. In other or further embodiments, capacitance-like elements (C) may represent processes involving charge accumulation or energy storage, wherein the system's response leads the input modulation. For example, a capacitive element may represent carrier accumulation at interfaces, band-filling effects, or other processes where the system can temporarily store energy or charge.

It will be understood, these basic elements, and/or other elements, may be combined in various series and parallel arrangements to model more complex processes. For example, RC combinations may represent processes with characteristic charging/discharging time constants; RL combinations may represent processes with characteristic delay times; RLC combinations may represent processes exhibiting both storage and delay characteristics. Without being bound by theory, the specific choice and arrangement of circuit elements may be selected based on the observed frequency-dependent response of the sample and known physical processes that may occur in the material system under investigation. As will be understood, other combinations of circuit elements may be used to model different types of samples and physical processes.

FIG 7C and FIG 7D illustrate the fitting of experimental data to the equivalent circuit model shown in FIG 7B. The data points show measured values while the solid lines show the fitted model response.

In general, a transfer function "P" representing a relation between the modulated input light "Li" and the modulated output light may be represented by the formula: $P = \frac{Ai}{Ao} exp \left[i\left({Φ}_{0}-{Φ}_{i}\right)\right] = P ′ + iP "$ where "Ai" is the input modulation amplitude of the input light "Li"; "Ao" is output modulation amplitude of the output light "Lo"; "Φo" is output modulation phase of the output light "Lo"; and "Φi" is input modulation phase of the input light "Li". For example, this may be applied to the modulated intensities of the input light "Li" and output light "Lo".

FIG 7C shows the imaginary component P" of the transfer function of the modulated intensities plotted versus frequency "F" in Hz. FIG 7D shows the same data represented in a Nyquist plot, where the imaginary component P" is plotted versus the real component P'. Based on the equivalent circuit model of FIG 7B, the transfer function P can be expressed as: $P = \frac{1}{{η}_{asd}} \left(\frac{{R}_{R} / {R}_{NR}}{1 + {iωτ}_{NR}}+1\right)$ where *"η_{asd}"* represents combined efficiency factors (absorption, separation, detection); *"R_{R}*/*R_{NR}"* represents the ratio between radiative and non-radiative resistances; *"τ_{NR}"* = *L*/*R_{NR}* represents the characteristic time of the non-radiative process; and "ω" (= *2πF*) is the angular frequency. For example, fitting this model to the experimental data yields the following parameter values: *R_{R}*/*R_{NR}*=0.0812 and *τ_{NR}* = 2.67 ms. For example, the resistance ratio may indicate that approximately 8.12% of carriers that recombine radiatively at high frequencies follow the non-radiative pathway at low frequencies. Furthermore, the characteristic time *τ_{NR}* may represents the timescale of the non-radiative process modeled by the inductance L and the resistance *R_{NR}*, which may be associated with trap-mediated recombination or other delayed response mechanisms in the sample.

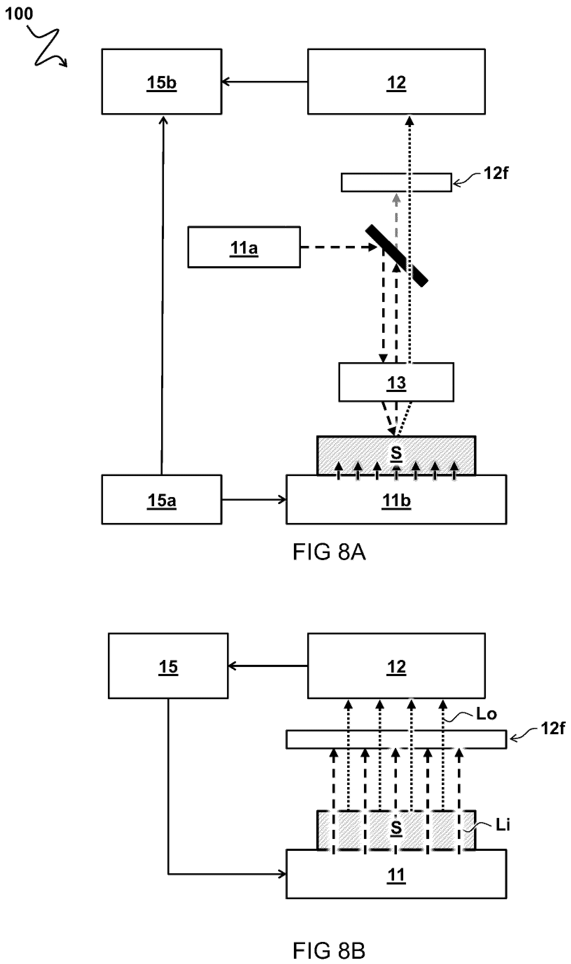

FIG 8A illustrates an embodiment of a system 100 for analyzing a sample "S". The system comprises a light source 11 having a first light source 11a (e.g., a laser) for providing a first input light component and a second light source 11b (e.g., an LED) for providing a second input light component. For example, the first input light component may be the oscillating component and the second input light component may be a steady state component (offset Bi), or vice versa. The system may further include an optical arrangement 13 (e.g., an objective) for directing the input light onto the sample "S". The optical arrangement 13 may be used to focus the input light from the first light source 11a, e.g. causing a localized interaction which may be used for position resolved measurement of the sample "S". Input light from the first light source 11a may be directed onto the sample "S" via a dichroic mirror. This mirror may reflect the input light and allow the output light to pass through. A detector 12 is configured to measure the output light from the sample, which may include a spectrometer or CCD camera. Optionally, an optical component 12f such as a filter may be arranged in the optical path between the sample and the detector, e.g. to remove at least some, or all, of the input light. The system may include multiple controllers 15a and 15b operatively coupled to the light sources and detector respectively, and which may be coupled to each other. Controller 15a (e.g. including a function generator) may control modulation parameters of the light sources while controller 15b (e.g. a computer running software for readout) may process measurement data from the detector to determine sample properties.

FIG 8B illustrates another embodiment of a system for analyzing a sample "S". The system comprises a single light source 11 (e.g., an LED) configured to direct input light "Li" onto the sample "S", and a detector 12 configured to measure output light "Lo" from the sample through an optical component 12f (e.g., a filter). A controller 15 is operatively coupled to both the light source and detector, enabling synchronized control of light source modulation and measurement of the sample response. This configuration demonstrates a more compact arrangement where a single light source provides the modulated excitation and a single detector (e.g., a photodiode) measures the time-dependent response.

Of course, many variations may be envisioned wherein one or more components of the system may be modified, combined, or arranged differently while maintaining the core functionality. For example, the objective may include one or more lenses and/or (curved) mirrors which may located at other positions along the (input) light beam, or the objective may be omitted, e.g. using an already sufficiently focused laser beam. For example, the arrangement of the dichroic mirror could also be reversed with the input light passing through the dichroic mirror and the output light being reflected by the dichroic mirror. For example, different types or combinations of light sources may be used; various optical components may be added, removed, or rearranged in the optical path; different types of detectors may be employed depending on the desired measurement characteristics; and the control system may be implemented using different hardware and software configurations. Also further component may be added or supplemented. For example, the dichroic mirror, or another mirror, may be used to control a position of the beam on the sample. Alternatively, or in addition, the sample may be placed on a moveable stage which may optionally include the second light source. The detector may include a single photodiode or an array of pixels. The detector may include wavelength resolving capabilities, and/or a wavelength resolving element such as a grating, prism, and/or wavelength filter(s) may be added. The second light source may also be placed elsewhere, e.g. illuminating the sample from the top in addition to the first light source. The second light source may also be omitted. For example, the first light source may generate both an oscillating component, and optional steady state component or offset. The specific implementation may be selected based on factors such as the type of sample being analyzed, the required measurement resolution and speed, cost considerations, and intended application.

For the purpose of clarity and a concise description, features are described herein as part of the same or separate embodiments, however, it will be appreciated that the scope of the invention may include embodiments having combinations of all or some of the features described. For example, while embodiments were shown for specific optical configurations with single or dual light sources and particular types of detectors, also alternative ways may be envisaged by those skilled in the art having the benefit of the present disclosure for achieving a similar function and result. E.g. the light source arrangement, optical components, and detection system may be combined or split up into one or more alternative components. The various elements of the embodiments as discussed and shown offer certain advantages, such as enabling comprehensive characterization of material properties through modulated photoluminescence measurements, providing both spectral and temporal information about sample responses, and allowing analysis of samples at various stages of device fabrication without requiring electrical contacts. Of course, it is to be appreciated that any one of the above embodiments or processes may be combined with one or more other embodiments or processes to provide even further improvements in finding and matching designs and advantages. It is appreciated that this disclosure offers particular advantages to characterization of semiconductor materials and devices, especially perovskite-based materials and photovoltaic devices, and in general can be applied for any application wherein time-dependent and/or spectrally-resolved analysis of photoluminescent materials is desired.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise.

## Claims

1. A method of analyzing a sample (S), the method comprising:
directing input light (Li) onto the sample (S), wherein the input light (Li) includes at least one modulated input component (Ci);
measuring output light (Lo) resulting from interaction (X) of the input light (Li) with the sample (S), wherein the measured output light (Lo) includes at least one modulated output component (Co) that varies as a function of time (t) depending on the interaction (X);
based on the measured output light (Lo), determining at least one of:
(i) an output modulation phase (Φo) of the at least one modulated output component (Co); and
(ii) an output modulation amplitude (Ao) of the at least one modulated output component (Co); and
based at least in part on at least one of the output modulation phase (Φo) and the output modulation amplitude (Ao), determining at least one property (Sp) of the sample (S) associated with the interaction (X).

2. The method according to claim 1, wherein the sample (S) comprises a luminescent material, wherein the measured output light (Lo) comprises a photoluminescent response of the luminescent material to the input light (Li), wherein the at least one modulated output component (Co) comprises a modulated characteristic of the photoluminescent response.

3. The method according to any of the preceding claims, wherein the sample ("S") comprises a stack of at least two different semiconductor layers forming a heterojunction.

4. The method according to any of the preceding claims, wherein the method is performed in-line during a manufacturing process of a semiconductor-based device, wherein the manufacturing process is adapted based on the determined at least one property (Sp) of the sample (S).

5. The method according to any of the preceding claims, wherein the at least one modulated input component (Ci) comprises an intensity modulation of the input light (Li) and the at least one modulated output component (Co) comprises a time-varying intensity characteristic (Io[t]) of the output light (Lo), wherein the output modulation amplitude (Ao) is determined relative to the input modulation amplitude (Ai).

6. The method according to any of the preceding claims, wherein the measured output light (Lo) is spectrally resolved; wherein an output spectrum (Λo) of the output light (Lo) is measured as a function of time (t); wherein the at least one modulated output component (Co) comprises a time-varying spectral characteristic (Λo[t]) of the output light (Lo).

7. The method according to any of the preceding claims, wherein the at least one modulated output component (Co) comprises at least one of a time-varying spectral position (λo[t]) of the output light (Lo) and a time-varying spectral width (Wo[t]) of the output light (Lo).

8. The method according to any of the preceding claims, wherein the output light (Lo) is detected as a function of time (t) in synchronization with the modulated input component (Ci), wherein the output modulation phase (Φo) is determined based on a shift in time (t) of the at least one modulated output component (Co) relative to the modulated input component (Ci), wherein the output modulation phase (Φo) is determined relative to the input modulation phase (Φi).

9. The method according to any of the preceding claims, wherein the input light (Li) is modulated according to a periodic function, wherein the at least one modulated input component (Ci) is modulated with an input modulation frequency (F) of less than 100 kHz.

10. The method according to any of the preceding claims, wherein the sample (S) is analyzed by performing a series of measurements (Mn), wherein between one iteration of the series of measurements (Mn) to another iteration, at least one input parameter (Ai,Bi,F) of the input light (Li) is changed; wherein at least one of the following input parameters of the input light (Li) is changed between different iterations of the series of measurements (Mn):
an input modulation frequency (F) of the modulated input component (Ci);
an input modulation amplitude (Ai) of the modulated input component (Ci);
an input offset (Bi) added to the modulated input component (Ci);
an input spectrum (Ai) of the modulated input component (Ci);
wherein the at least one property of the sample (S) is determined based on the measured modulation amplitude (Ao) and/or phase shift (Φo) as function of the varied one or more input parameters.

11. The method according to any of the preceding claims, wherein the property (Sp) of the sample (S) is determined based on a relative amplitude or phase between the modulation of an intensity characteristic (Io) of the measured output light (Lo) and the modulation of a spectral characteristic (λo, Wo) of the measured output light (Lo).

12. The method according to any of the preceding claims, wherein the output modulation phase (Φo) and output modulation amplitude (Ao) of the at least one modulated output component (Co) are fitted to a model of the sample (S) having the interaction (X) with the input light (Li) to produce the output light (Lo), wherein the model is based on a predetermined optical equivalent electronic circuit that models the interaction (X), wherein fitting parameters of the model are based on one or more components of the optical equivalent electronic circuit representing one or more material properties (Sp) of the sample (S) which affect the interaction.

13. The method according to any of the preceding claims, wherein the directing of the input light (Li) and/or the measuring of the output light (Lo) is spatially resolved for analyzing different locations of the sample (S), wherein the at least one property (Sp) of the sample (S) is determined for each of the analyzed different locations.

14. A system (10) for analyzing a sample ("S"), the system comprising:
at least one light source (11) configured to direct input light ("Li") onto the sample ("S"), wherein the input light ("Li") includes at least one modulated input component ("Ci");
at least one light detector (12) configured to measure output light ("Lo") resulting from interaction ("X") of the input light ("Li") with the sample ("S"), wherein the measured output light ("Lo") includes at least one modulated output component ("Co") that varies as a function of time ("t") depending on the interaction ("X"); and
at least one controller (15) operatively coupled to the at least one light source (11) and the least one light detector (12), the at least one controller (15) comprising at least one processor configured to:
determine, based on the measured output light ("Lo"), at least one of:
(i) an output modulation phase ("Φo") of the at least one modulated output component ("Co"); and
(ii) an output modulation amplitude ("Ao") of the at least one modulated output component ("Co"); and determine, based at least in part on at least one of the output
modulation phase ("Φo") and the output modulation amplitude ("Ao"), at least one property ("Sp") of the sample ("S") associated with the interaction ("X").

15. A non-transitory computer-readable medium storing instructions that, when executed by the at least one processor of the system (10) according to the preceding claims, causes the system (10) to perform the method according to any of the preceding claims.
